# DEMANDE DE BREVET EUROPEEN

(11) **EP 1 275 698 A1**
(43) Date de publication de la demande: **15.01.2003**
(21) Numéro de dépôt: 02291593.8
(22) Date de dépôt: 26.06.2002
(51) Int. Cl.: C08L 95/00, E01C 19/10

(54) **Enrobé bitumineux à froid, procédé et émulsion pour sa préparation**

(30) Priorité: 10.07.2001 FR 0109165
(71) Demandeur: Appia, 92442 Issy les Moulineaux (FR)
(72) Inventeur: Antoine, Jean-Pierre, 69340 Francheville (FR); Marcilloux, Jérôme, 69360 Saint Symphorien d'Ozon (FR)
(74) Mandataire: Bezault, Jean

(57) **Abrégé**

L'émulsion aqueuse de bitume contient au moins un polymère hydrosoluble, de préférence l'alcool polyvinylique.

De telles émulsions assurent un meilleur mouillage des granulats et peuvent être réalisés à partir de bitumes routiers relativement durs, dont l'emploi était jusqu'ici réservé aux enrobés à chaud et qui seuls assurent une bonne résistance des revêtements routiers aux températures élevées.

## Description

L'invention concerne un procédé pour préparer un enrobé bitumineux à froid pour application routière dans lequel on prépare une émulsion aqueuse contenant du bitume et on la mélange à froid à des fragments solides.

Par opposition aux techniques routières utilisant du bitume chaud, celles qui font appel aux émulsions de bitume sont considérées comme peu polluantes et sont appréciées notamment en raison de l'économie d'énergie lors de l'application, due à l'absence de chauffage du bitume, et de la souplesse d'utilisation liée à la simplicité des techniques de mise en oeuvre.

L'emploi des émulsions de bitume est particulièrement développée en matière de répandage, notamment pour la réalisation de couches d'accrochage et d'enduit superficiel.

En revanche, des difficultés limitent l'utilisation des émulsions dans les techniques d'enrobage. En particulier, tandis que la mise en contact d'un bitume fondu avec des granulats séchés par la chaleur assure un enrobage de bonne qualité, dans le cas d'une émulsion la qualité du mouillage des granulats, utilisés tels quels à froid, est tributaire de leur état de surface qui dépend lui-même de leur nature chimique. On est donc conduit à ajuster la formulation des émulsions en fonction des caractéristiques des granulats.

Par ailleurs, les techniques à chaud utilisent couramment des bitumes durs, c'est-à-dire qui entrent dans les classes de pénétrabilité 10/20, 20/30, 35/50 et 50/70, telles que définies dans la norme française T66-004. Ces bitumes apportent notamment, après application, une bonne résistance aux températures élevées, égales ou supérieures à 50°C. En revanche, ces bitumes se dispersent mal en présence d'eau, conduisant fréquemment à des émulsions grossières et instables. En outre, lorsqu'ils sont utilisés à froid, au-dessous de 50°C, ils présentent un faible caractère filmogène, ce qui nuit à la cohésion du produit final.

L'invention vise notamment un procédé du genre défini en introduction, et prévoit que ladite émulsion contient au moins un polymère hydrosoluble.

On constate que la présence des fonctions chimiques polaires qui rendent le polymère hydrosoluble permet également l'établissement d'interactions entre celui-ci et la surface des granulats. Il en résulte une meilleure liaison entre les granulats et le bitume. Ceci vaut non seulement pour les granulats proprement dits, mais également pour les divers matériaux divisés qui peuvent être utilisés en remplacement de ceux-ci dans des enrobés bitumineux, tels que fraisats, agrégats d'enrobés, recyclats de démolition de béton, mâchefers, scories et laitiers. Le caractère filmogène du polymère compense les insuffisances du bitume dur à cet égard, conduisant à un enrobage parfait, grâce à la formation d'un film de polymère à la surface des granulats et entre ces derniers. On peut faire varier en fonction des besoins le caractère filmogène du polymère, par le choix de la nature chimique de celui-ci et de sa masse moléculaire.

Des caractéristiques optionnelles de l'invention, complémentaires ou de substitution, sont énoncées ci-après:
- Ledit polymère hydrosoluble est l'alcool polyvinylique.
- Ledit polymère hydrosoluble est choisi parmi des polymères acryliques ou méthacryliques, des polyéthers et des pyrrolidones.
- La masse moléculaire dudit polymère hydrosoluble est comprise entre 300 et 500 000 et de préférence entre 6 000 et 300 000.
- La concentration massique de l'émulsion en polymère hydrosoluble est comprise entre 0,05 et 3 % et de préférence entre 0,1 et 1 %.
- Le bitume utilisé pour préparer l'émulsion présente une pénétrabilité à l'aiguille, mesurée selon la norme française T66-004, comprise entre 10 et 300 et de préférence entre 10 et 70. La consistance du bitume peut être classiquement modifiée par des plastomères ou des élastomères.
- La concentration massique de l'émulsion en bitume est comprise entre 10 et 80 % et de préférence entre 50 et 70 %.
- Un agent tensio-actif est incorporé à l'émulsion.
- Ledit agent tensio-actif est une amine grasse et de préférence une polyamine.
- La concentration massique de l'émulsion en agent tensio-actif est comprise entre 0,1 et 2 % et de préférence entre 0,1 et 0,8 %.
- On favorise la rupture de l'émulsion lors de l'enrobage au moyen d'un agent de rupture incorporé au mélange lors de l'opération d'enrobage ou préalablement mélangé aux granulats.
- Ledit agent de rupture est choisi parmi des ciments, la chaux, le carbonate de sodium, des sels basiques, des amines grasses et des tétraborates hydrosolubles, notamment le tétraborate de sodium.
- On prépare l'émulsion en mélangeant le bitume à une phase aqueuse contenant en solution ledit polymère hydrosoluble. En variante, ce polymère peut être ajouté à l'émulsion déjà formée en fonction des exigences de mise en oeuvre industrielle.

L'invention a également pour objet un enrobé bitumineux à froid pour application routière tel qu'on peut l'obtenir par le procédé tel que défini ci-dessus, comprenant une émulsion aqueuse et des fragments solides, ladite émulsion contenant du bitume et au moins un polymère hydrosoluble.

L'invention vise encore une émulsion aqueuse utilisable pour préparer un tel enrobé, contenant du bitume et au moins un polymère hydrosoluble choisi parmi des polymères acryliques ou méthacryliques, des pyrrolidones et l'alcool polyvinylique.

Dans le procédé et dans l'émulsio selon l'invention, lorsqu'un agent tensio-actif et/ou un agent de rupture sont incorporés, leurs proportions sont choisies pour régler de manière appropriée la facilité de rupture de l'émulsio telle que déterminée selon la norme française XP T66-017. En particulier, l'invention permet de réduire la proportion de l'agent tensio-actif, ou d'utiliser de tels agents conduisant habituellement à des indices de rupture faibles et qui sont généralement réservés aux émulsions de répandage.

### Exemple 1

On prépare trois émulsions contenant un bitume dur de pénétrabilité 10/20, dont les compositions sont indiquées dans le tableau 1. L'émulsion 1 ne contient pas de polymère hydrosoluble. L'émulsion 2 contient du polyéthylèneglycol de masse moléculaire 600, et l'émulsion 3 contient de l'alcool polyvinylique de masse moléculaire 100 000, ces masses moléculaires étant des valeurs typiques pour les polymères considérés disponibles dans le commerce.

**Tableau 1**

| Émulsion | 1 | 2 | 3 |
|---|---|---|---|
| Constituants | Proportions (% en masse) | | |
| Bitume 10/20 | 60 | 57,5 | 59 |
| Émulsamine L 60 | 0,22 | 0,22 | 0,22 |
| CaCl₂ | 0,3 | 0,3 | 0,3 |
| HCl | 0,19 | 0,19 | 0,19 |
| H₂O | 39,29 | 39,29 | 39,29 |
| Polyéthylèneglycol | - | 2,5 | - |
| Alcool polyvinylique | - | - | 1 |

| Propriétés | | | |
|---|---|---|---|
| Diamètre médian (µm) | 9,4 | 7,1 | 5,4 |
| Taux de décantation (%) | 10 | 5 | 0 |
| Indice de rupture | 87 | 105 | 130 |

Dans le présent mémoire, "pénétrabilité" se réfère à la pénétrabilité à l'aiguille mesurée selon la norme française T66-004. Émulsamine L 60 est la désignation commerciale d'un émulsifiant fourni par la Société CECA.

On détermine les propriétés suivantes des trois émulsions, qui apparaissent également dans le tableau 1:
- le diamètre médian des particules de bitume dans l'émulsion, déterminé par granulométrie laser;
- le taux de décantation après 7 jours, selon une méthode interne qui permet de comparer la stabilité dans le temps de différentes émulsions; et
- l'indice de rupture déterminé selon la norme française XP T66-017.

On constate en présence du polymère hydrosoluble une amélioration de toutes ces caractéristiques, cette amélioration étant plus prononcée avec l'alcool polyvinylique.

### Exemple 2

On prépare 5 émulsions contenant un bitume de perméabilité 35/50 et le même alcool polyvinylique que dans l'exemple 1, à différentes concentrations. Les compositions de ces émulsions sont données dans le tableau 2, ainsi que le taux de décantation et l'indice de rupture, déterminés comme dans l'exemple 1. Des enrobés de type béton bitumineux à froid sont réalisés en mélangeant ces émulsions à des granulats dont la composition est la suivante, la proportion de bitume dans les enrobés étant de 5,6 % en masse:
6/10 basaltique 40 %
2/6 basaltique 20 %
0/2 basaltique 40 %.

L'essai Duriez tel que défini dans la norme française T98-251-4 est effectué sur ces enrobés, et les résultats sont également consignés dans le tableau 2.

**Tableau 2**

| Constituants | Proportions (% en masse) | | | | |
|---|---|---|---|---|---|
| Bitume 35/50 | 59,9 | 59,7 | 59,5 | 59,3 | 59 |
| Émulsamine L 60 | 0,22 | 0,22 | 0,22 | 0,22 | 0,22 |
| HCl | 0,19 | 0,19 | 0,19 | 0,19 | 0,19 |
| H₂O | 39,59 | 39,59 | 39,59 | 39,59 | 39,59 |
| Alcool polyvinylique | 0,1 | 0,3 | 0,5 | 0,7 | 1 |

| Propriétés de l'émulsion | | | | | |
|---|---|---|---|---|---|
| Taux de décantation (%) | 15 | 12 | 3 | 2 | 0 |
| Indice de rupture | 90 | 120 | 150 | > 160 | > 160 |

| Essai Duriez | | | | | |
|---|---|---|---|---|---|
| R (MPa) | 6,8 | 8,5 | 10,3 | 10,6 | 10,6 |
| r (MPa) | 5,11 | 6,4 | 8,7 | 8,5 | 8,9 |
| r/R | 0,75 | 0,75 | 0,81 | 0,84 | 0,85 |

On constate qu'une concentration croissante du polymère se traduit par un effet croissant de celui-ci sur les propriétés de l'émulsion. De même, la résistance à la compression à sec R et la résistance à la compression dans l'eau r vont également en croissant avec la concentration du polymère, ainsi que leur rapport r/R, indiquant une amélioration de la sensibilité à l'eau des enrobés après rupture de l'émulsion.

### Exemple 3

On compare dans cet exemple un enrobé à froid B ayant la même composition que l'enrobé de l'exemple 2 dont l'émulsion est la plus riche en alcool polyvinylique, et un enrobé à chaud formé du même bitume et des mêmes granulats que ceux utilisés dans le précédent, dans les mêmes quantités relatives.

On effectue sur les deux enrobés l'essai Duriez, l'essai à la presse à cisaillement giratoire selon la norme française P98-252 et l'essai d'orniérage (30 000 cycles à 60°C) selon la norme française P98-253-1. Les résultats sont donnés dans le tableau 4.

**Tableau 3**

| Enrobé | A | B |
|---|---|---|
| Essai Duriez | | |
| R (MPa) | 12,4 | 11,2 |
| r (MPa) | 11,1 | 8,7 |
| r/R | 0,9 | 0,8 |
| Presse à cisaillement giratoire | | |
| % de vide à 10 G | 15,7 | 18,7 |
| % de vide à 60 G | 9 | 14,3 |
| Orniérage (%) | 6 | 1 |

Les caractéristiques à l'essai Duriez sont très voisines pour les deux enrobés, et ces deux enrobés présentent un très faible orniérage.

### Exemple 4

Dans cet exemple, on compare les caractéristiques d'enrobage d'une émulsion selon l'invention et d'une émulsion classique. On prépare à cet effet deux émulsions ayant les compositions pondérales suivantes:

| | |
|---|---|
| Bitume 160/220 | 65 % |
| Polyamine grasse | 0,8 % |
| HCl | 0,25 % |
| H₂O | 33,95 % |
| | |
| Bitume 35/50 | 64 % |
| Émulsamine L 60 | 0,2 % |
| HCl | 0,2 % |
| H₂O | 39,6 % |
| Alcool polyvinylique | 1 %. |

La première de ces compositions est couramment utilisée pour les graves émulsions.

On enrobe à l'aide de ces deux émulsions une formule continue de mâchefer 0/20, la teneur en liant résiduel étant de 3,9 % en poids. Il n'est pas possible d'obtenir un enrobage avec une émulsion classique contenant un bitume plus dur que 160/220.

Les résultats à l'essai Duriez sont donnés dans le tableau 4.

**Tableau 4**

| Émulsion | 160/220 | 35/50 Polymère |
|---|---|---|
| Essai Duriez | | |
| R (MPa) | 2,23 | 4 |
| r (MPa) | 0,82 | 2,4 |
| r/R | 0,37 | 0,6 |

Ces résultats montrent que la présence de l'alcool polyvinylique améliore la sensibilité à l'eau de l'enrobé. De plus, on peut observer que l'enrobage est complet avec l'émulsion selon l'invention, alors qu'il est limité à 75 % avec l'émulsion classique.

### Exemple 5

On prépare deux graves émulsions en utilisant un même bitume 160/220 et des granulats basés sur une même formule 0/20. Les compositions des émulsions et des granulats sont indiquées dans le tableau 5, ainsi que les résultats à l'essai Duriez des deux enrobés.

**Tableau 5**

| Composition des émulsions (% en masse) | | |
|---|---|---|
| Bitume 160/220 | 60 | 59,9 |
| Émulsamine L 60 | 0,6 | 0,5 |
| HCl | 0,6 | 0,5 |
| H₂O | 38,8 | 39 |
| Alcool polyvinylique | | 0,1 |

| Composition des granulats (% en masse) | | |
|---|---|---|
| Fraction 6/20 | 58 | 58 |
| Fraction 0/6 | 42 | 40 |
| Ciment | | 2 |

| Essai Duriez | | |
|---|---|---|
| R (MPa) | 3,12 | 3,58 |
| r (MPa) | 1,12 | 2,62 |
| r/R | 0,36 | 0,73 |

Dans le cas de l'enrobé selon l'invention contenant de l'alcool polyvinylique, la présence de celui-ci, ainsi que l'addition de ciment qu'il autorise dans le mélange, contribuent à améliorer la résistance à l'eau, ce qui se traduit par un rapport r/R plus élevé. En effet, l'incorporation dans l'émulsion de polymères hydrosolubles permet d'ajouter aux enrobés du ciment, de la chaux et d'autres produits très basiques qui provoquent habituellement la rupture prématurée des émulsions de bitume acides utilisées dans l'industrie routière.

L'invention est donc particulièrement adaptée à la réalisation de graves mixtes ciment/bitume ou d'enrobés coulés à froid qui font le plus souvent appel au ciment pour fixer les caractéristiques de rupture et de résistance à l'eau.

L'effet de rupture peut également être apporté par des produits classiques comme des amines grasses et des sels minéraux.

En outre, lorsqu'on utilise un tétraborate hydrosoluble en combinaison avec l'alcool polyvinylique, il provoque la réticulation de celui-ci, le rendant insoluble dans l'eau et par conséquent moins sensible à cette dernière.

## Revendications

1. Procédé pour préparer un enrobé bitumineux à froid pour application routière dans lequel on prépare une émulsion aqueuse contenant du bitume et on la mélange à froid à des fragments solides de manière à enrober ceux-ci de bitume, **caractérisé en ce que** ladite émulsion contient au moins un polymère hydrosoluble choisi parmi l'alcool polyvinylique, des polymères acryliques ou méthacryliques et des pyrrolidones.

2. Procédé selon la revendication 1, dans lequel ledit polymère hydrosoluble est l'alcool polyvinylique.

3. Procédé selon la revendication 1, dans lequel ledit polymère hydrosoluble est choisi parmi des polymères acryliques ou méthacryliques et des pyrrolidones.

4. Procédé selon l'une des revendications précédentes, dans lequel la masse moléculaire dudit polymère hydrosoluble est comprise entre 300 et 500 000 et de préférence entre 6 000 et 300 000.

5. Procédé selon l'une des revendications précédentes, dans lequel la concentration massique de l'émulsio en polymère hydrosoluble est comprise entre 0,05 et 3 % et de préférence entre 0,1 et 1 %.

6. Procédé selon l'une des revendications précédentes, dans lequel le bitume utilisé pour préparer l'émulsio présente une pénétrabilité à l'aiguille, mesurée selon la norme française T66-004, comprise entre 10 et 300 et de préférence entre 10 et 70.

7. Procédé selon l'une des revendications précédentes, dans lequel la concentration massique de l'émulsio en bitume est comprise entre 10 et 80 % et de préférence entre 50 et 70 %.

8. Procédé selon l'une des revendications précédentes, dans lequel un agent tensio-actif est incorporé à l'émulsion.

9. Procédé selon la revendication 8, dans lequel ledit agent tensio-actif est une amine grasse et de préférence une polyamine.

10. Procédé selon l'une des revendications 8 et 9, dans lequel la concentration massique de l'émulsion en agent tensio-actif est comprise entre 0,1 et 2 % et de préférence entre 0,1 et 0,8 %.

11. Procédé selon l'une des revendications précédentes, dans lequel on favorise la rupture de l'émulsion lors de l'enrobage au moyen d'un agent de rupture incorporé au mélange lors de l'opération d'enrobage ou préalablement mélangé aux granulats.

12. Procédé selon la revendication 11, dans lequel ledit agent de rupture est choisi parmi des ciments, la chaux, le carbonate de sodium, des sels basiques, des amines grasses et des tétraborates hydrosolubles, notamment le tétraborate de sodium.

13. Procédé selon la revendication 12, rattachée à la revendication 2, dans lequel ledit agent de rupture est un tétraborate hydrosoluble.

14. Procédé selon l'une des revendications précédentes, dans lequel lesdits fragments solides sont choisis parmi des granulats, des fraisats, des agrégats d'enrobés, des recyclats de démolition de béton, des mâchefers, des scories et des laitiers.

15. Procédé selon l'une des revendications précédentes, dans lequel on prépare l'émulsion en mélangeant le bitume à une phase aqueuse contenant en solution ledit polymère hydrosoluble.

16. Procédé selon l'une des revendications 1 à 14, dans lequel on ajoute ledit polymère hydrosoluble à une émulsion bitumineuse déjà formée.

17. Enrobé bitumineux à froid pour application routière tel qu'on peut l'obtenir par le procédé selon l'une des revendications précédentes, comprenant une émulsion aqueuse et des fragments solides, ladite émulsion contenant du bitume et au moins un polymère hydrosoluble choisi parmi l'alcool polyvinylique, des polymères acryliques ou méthacryliques et des pyrrolidones.

18. Émulsion aqueuse utilisable pour préparer un enrobé selon la revendication 17, contenant du bitume et au moins un polymère hydrosoluble choisi parmi des polymères méthacryliques, des pyrrolidones et l'alcool polyvinylique.
